(19) Europäisches Patentamt
European Patent Office
Office européen des brevets

(11) **EP 2 634 966 A1**

(12) **EUROPÄISCHE PATENTANMELDUNG**

(43) Veröffentlichungstag:
**04.09.2013 Patentblatt 2013/36**

(51) Int Cl.:
***H04L 12/24*** *(2006.01)*

(21) Anmeldenummer: **13155055.0**

(22) Anmeldetag: **13.02.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **28.02.2012 DE 102012003977**

(71) Anmelder: **Vodafone Holding GmbH**
**40213 Düsseldorf (DE)**

(72) Erfinder: **Hansmann, Johannes**
**41352 Korschenbroich (DE)**

(74) Vertreter: **Müller & Schubert**
**Patentanwälte**
**Innere Wiener Straße 13**
**81667 München (DE)**

(54) **Verfahren zum Untersuchen eines Datentransportnetzwerks und Computerprogrammprodukt**

(57)　Die vorliegende Erfindung betrifft ein Verfahren zum Untersuchen eines Datentransportnetzwerkes, das zumindest die folgenden Verfahrensschritte umfasst:
a) Bereitstellen eines Netzwerkmodells, das als Netzwerkelemente zumindest Netzwerkverbindungen und Netzwerkknoten enthält und einem real existierenden oder einem geplanten Datentransportnetzwerk entspricht, und

b) Überprüfen des Netzwerkmodells

dadurch gekennzeichnet, dass bei der Überprüfung des Netzwerkmodells mindestens ein netzteilender Schnitt durch das Netzwerkmodell gesetzt wird und für zumindest einen Teil der von dem Schnitt betroffenen Netzwerkelemente eine Analyse bezüglich des Datenverkehrs durchgeführt wird. Weiterhin betrifft die Erfindung ein Computerprogrammprodukt für dieses Verfahren.

Fig. 1

EP 2 634 966 A1

**Beschreibung**

Die Erfindung betrifft ein Verfahren zum Untersuchen eines Datentransportnetzwerks, wobei das Verfahren zumindest die folgenden Verfahrensschritten umfasst:

a) Bereitstellen eines Netzwerkmodells, welches als Netzwerkelemente zumindest Netzwerkverbindungen und Netzwerkknoten enthält und einem real existierenden oder einem geplanten Datentransportnetzwerk entspricht, und
b) Überprüfen des Netzwerkmodells .

Weiterhin betrifft die Erfindung ein entsprechendes Computerprogrammprodukt.

Ein Netzwerk zum Übermitteln beziehungsweise Transportieren von Daten besteht bekanntlich aus einer Vielzahl von Verarbeitungseinheiten, welche Daten verarbeiten, ins Netzwerk leiten, empfangen oder weiterleiten. Diese Verarbeitungseinheiten werden im Folgenden als Netzwerkknoten, Netzknoten, Knotenpunkte oder kurz als Knoten bezeichnet. Zum Übermitteln von Daten zwischen diesen Netzwerkknoten sind die Netzwerkknoten durch physikalische Netzwerkverbindungen, die im Folgenden auch als Verbindungen oder Links bezeichnet werden, miteinander verbunden. Dabei können die Netzwerkknoten auf verschiedene Weise verbunden werden. Die Struktur der Knoten und Links untereinander wird als Netzwerktopologie, kurz Topologie, bezeichnet.

Die Topologie eines Netzwerks ist entscheidend für seine Ausfallsicherheit. Hierbei ist zu berücksichtigen, dass es zum Ausfall einzelner oder mehrerer Netzwerkverbindungen oder Netzwerkknoten kommen kann. Hierzu werden in der Regel bei der Auslegung der Topologie alternative Netzwerkverbindungen oder Netzwerkknoten zur Verfügung gestellt. Weiterhin beeinflusst die Netzwerktopologie unter anderem die Datenübertragungskapazität und den Aufwand an bereitzustellenden Netzwerkeinrichtungen eines Netzwerks wesentlich und damit auch die entsprechenden Netzwerkkosten.

Datentransportnetzwerke bilden zum Beispiel die Grundlage in Telekommunikationsnetzwerken, als Transportnetzwerke in zellularen Mobilfunknetzen oder auch reinen Computernetzwerken. Um Daten von einem Teilnehmer zu einem anderen Teilnehmer zu übertragen, werden Netzwerkknoten, wie beispielsweise Vermittlungsstellen über Netzwerkverbindungen mit einander vernetzt. Als physikalische Netzwerkverbindungen werden elektrische oder optische Leitungen oder funkbasierte Verbindungen verwendet. Über eine physikalische Verbindung können gleichzeitig eine Vielzahl von logischen Verbindungen eingerichtet werden.

In DE 10 2008 026 049 A1 ist ein Verfahren zur Planung und Optimierung eines Datentransportnetzwerkes beschrieben. Hierbei wird davon ausgegangen, dass zur Optimierung von geplanten oder existierenden Datentransportnetzwerken Verfahren bekannt sind, die die Topologie eines Netzwerks und/oder die Bereitstellung von Netzwerkelemente optimal an ein erwartetes Datentransfervolumen zwischen den einzelnen Netzwerkknoten anpassen. Mit Hilfe eines Netzwerkmodells des geplanten oder existierenden Datentransportnetzwerks werden die Topologie und die eingesetzten Netzwerkelemente durch ein Optimierungsverfahren optimal an ein erwartetes oder bekanntes Datentransfervolumen angepasst. Dadurch werden insbesondere eine Überdimensionierung von Netzwerkverbindungen oder Netzwerkknoten vermieden und somit letztendlich Investitionskosten für das Netzwerk reduziert.

Zudem befasst sich diese Druckschrift damit, dass die Ausfallsicherheit eines optimierten Netzwerks nicht notwendigerweise den verlangten Anforderungen entspricht, da die Ausfallsicherheit entscheidend auch von der Topologie des optimierten Datentransportnetzwerks abhängt und diese bei den bekannten Optimierungsverfahren bei einer Optimierung eines Netzwerks gar nicht oder nur unzureichend berücksichtigt wird. Dies kann in einem realen optimierten Netzwerk zu ungewollten Blockierungen von Datenübermittlungen bei Ausfällen einzelner Netzwerkelemente führen.

Hierzu schlägt die DE 10 2008 026 049 A1 ein Verfahren zur Planung und Optimierung eines Datentransportnetzwerks vor, mit einem Bereitstellen eines Netzwerkmodells, einem Optimieren der Netzwerkverbindungen des Netzwerkmodells durch ein Optimierungsverfahren und einem Einrichten und/oder Optimieren des Datentransportnetzwerks entsprechend dem optimierten Netzwerkmodell. In dem Verfahren wird zudem eine Ausfallsicherheit durch Ausführen einer Verfügbarkeitsanalyse für die Datenübertragung in dem optimierten Netzwerkmodell mit Kapazitätsanforderungen an die Netzwerkverbindungen durch ein vorgegebenes Datenübertragungsvolumen an dem optimierten Netzwerkmodell ermittelt. Dabei werden Datenübertragungskapazitäten und Datenübertragungsvolumen berücksichtigt. Die Verfügbarkeitsanalyse kann beispielsweise ein probabilistisches Verfahren beinhalten. Bei einer nicht akzeptablen Ausfallsicherheit wird das optimierte Netzwerkmodell entweder verworfen oder weiter verfeinert.

Insbesondere wird ein Bewerten des Ergebnisses der Verfügbarkeitsanalyse in dem optimierten Netzwerkmodell nach dem Stand der Technik und ein Erstellen von neuen Randbedingungen vorgeschlagen, falls das Bewerten eine zu geringe Ausfallsicherheit ergibt. Die neuen Randbedingungen sind dann für ein erneutes Optimieren der Netzwerkknoten und Netzwerkverbindungen durch das Optimierungsverfahren unter Einhaltung dieser neuen Randbedingungen vorgesehen.

Ein Nachteil dieses bekannten Verfahrens besteht darin, dass die Verfügbarkeitsanalyse und damit die Beurteilung der Ausfallsicherheit an dem bereits optimierten Netzwerkmodell durchgeführt werden.

Bei bekannten Ausfallanalysen wird zudem in der Regel ein Link und/oder Knoten aus dem Netz gewählt und dahingehend überprüft, ob der Datenverkehr über die Links und/oder Knoten des verbleibenden Netzes noch transportiert werden kann. Diese Berechnungen dauern sehr lange und berücksichtigen zudem nur die Ausfälle einzelner Links. Diese Berechnung und insbesondere auch die Berücksichtigung von Mehrfachausfällen, das heißt von Fällen, bei denen mehr als ein Link oder Knoten ausfällt, ist in realen Netzen wegen der dafür erforderlichen hohen Rechenzeit nicht praktikabel. Insbesondere können konkrete Engpässe eines realen Netzwerkes nicht oder nicht in einem vertretbaren Zeitrahmen zuverlässig lokalisiert werden.

Aufgabe der vorliegenden Erfindung ist es daher ein Verfahren zum Untersuchen eines Datentransportnetzwerkes, das im Folgenden auch als Netzwerk oder Netz bezeichnet wird, zu schaffen, bei dem zu erwartende Störungen in dem Netzwerk erkannt und während der Überprüfung des Netzwerkmodells berücksichtigt werden können.

Der Erfindung liegt die Erkenntnis zugrunde, dass diese Aufgabe gelöst werden kann, indem eine Teilmenge an Netzwerkelementen ermittelt wird und der Ausfall einzelner oder mehrerer der Netzwerkelemente dieser Teilmenge überprüft wird. Diese Überprüfung kann mit einer Verfügbarkeitsanalyse für die Überprüfung der Ausfallsicherheit kombiniert werden.

Erfindungsgemäß wird diese Aufgabe daher gelöst durch ein Verfahren zum Untersuchen eines Datentransportnetzwerkes, das zumindest die folgenden Verfahrensschritte umfasst:

> a) Bereitstellen eines Netzwerkmodells, das als Netzwerkelemente zumindest Netzwerkverbindungen und Netzwerkknoten enthält und einem real existierenden oder einem geplanten Datentransportnetzwerk entspricht, und
>
> b) Überprüfen des Netzwerkmodells.

Das Verfahren ist dadurch gekennzeichnet, dass bei der Überprüfung des Netzwerkmodells mindestens ein netzteilender Schnitt durch das Netzwerkmodell gesetzt wird und für zumindest einen Teil der von dem Schnitt betroffenen Netwerkelementen eine Analyse bezüglich des Datenverkehrs durchgeführt wird.

Unter Datentransportnetzwerk, das im Folgenden auch als Netzwerk oder Netz bezeichnet wird, wird im Sinne der Erfindung ein Netzwerk verstanden, das zum Übermitteln beziehungsweise Transportieren von Daten dient. Das Netzwerk kann beispielsweise insbesondere ein Telekommunikationsnetzwerk, insbesondere ein Mobilfunknetz oder ein Computernetzwerk darstellen. Allerdings ist das erfindungsgemäße Verfahren nicht auf diese Netzwerke beschränkt. Beispielsweise kann die Untersuchung auch an anderen Netzwerken, wie beispielsweise Netzwerken betreffend die Straßenverkehrsführung durchgeführt werden.

Als Untersuchung eines Datentransportnetzwerkes wird die Überprüfung und gegebenenfalls anschließende Auslegung eines Netzwerkes verstanden. Die Untersuchung beinhaltet hierbei sowohl die Überprüfung eines neuen, geplanten, das heißt noch nicht existenten, Netzwerkes als auch die Überprüfung eines bereits existierenden Netzwerkes. Die Auslegung des Netzwerkes, die gegebenenfalls anschließend an die Untersuchung erfolgen kann, kann daher ebenfalls entweder die Erstellung eines neuen Netzwerkes oder die Änderung oder Verbesserung eines bereits existierenden Netzwerkes umfassen. Hierbei werden vorzugsweise die einzelnen Netzwerkelemente, insbesondere sowohl die Netzwerkknoten als auch die Netzwerkverbindungen, die im Folgenden auch als physikalische Verbindungen oder als Links bezeichnet werden, einbezogen, das heißt geeignet ausgewählt und eingerichtet oder geändert.

Das Verarbeiten, ins Netzwerk leiten, Empfangen und Weiterleiten von Datenverkehr an Knoten wird im Folgenden der Einfachheit halber als Weiterleiten oder Transportieren bezeichnet.

Die Überprüfung des Netzwerkmodells kann erfindungsgemäß auch eine Optimierung des Netzwerkmodells auf der Basis der Überprüfungsergebnisse umfassen. Vorzugsweise erfolgt die Optimierung erst nachdem die Analyse bezüglich des Datenverkehrs abgeschlossen ist.

Die Überprüfung des Datentransportnetzwerkes umfasst erfindungsgemäß die Überprüfung einer Teilmenge der Netzwerkeinrichtungen des Netzwerkes hinsichtlich vorgegebener Kriterien. Hierzu wird insbesondere ein Netzwerkmodell verwendet, das dem real existierenden oder einem geplanten Datentransportnetzwerk entspricht, das heißt das die Netzwerkverbindungen (Links) und Netzwerkknoten (Knoten) sowie deren Eigenschaften, wie beispielsweise Datenübermittlungskapazität, entsprechend der Topologie des real existierenden oder geplanten Datentransportnetzwerkes wiedergibt.

Die tatsächlichen Netzwerkeinrichtungen, das heißt insbesondere Netzwerkknoten und/oder Netzwerkverbindungen, werden im Folgenden in dem Netzwerkmodell als Netzwerkelemente bezeichnet. Da diese Netzwerkelemente den Netzwerkeinrichtungen entsprechen und das Netzwerkmodell dem Netzwerk entspricht, wird im Folgenden auf das Netwerkmodell auch als Netzwerk Bezug genommen. Sofern das real existierende oder geplante Netzwerk gemeint ist, wird dieses gegebenenfalls zur Verdeutlichung als tatsächliches Netzwerk bezeichnet.

Ein Kriterium, das bei der Überprüfung des Netzwerkes erfindungsgemäß berücksichtigt wird, ist der Datenverkehr an zumindest den von dem Schnitt betroffenen Netzwerkelementen. Die Analyse des Datenverkehrs betrifft erfindungsgemäß insbesondere die Analyse des Datenverkehrs, der über den gesetzten Schnittes nicht oder nicht vollständig transportiert werden kann. Unter Datenverkehr wird hierbei insbesondere das Datentransfervolumen, das auch als Datenübertragungsvolumen, Verkehrsvolumen, Datenmenge oder Datenvolumen bezeichnet wird, verstanden. Der Datenverkehr wird im Folgenden auch als Verkehr bezeichnet. Der Datenverkehr wird in so genannten Anfragen, die auch als Demand bezeichnet werden, übermittelt. Jeder Demand weist hierbei eine gewisses Menge an Datentransfervolumen auf. Der nicht oder nicht vollständig transportierbare Datenverkehr wird auch als Verkehrsverlust (traffic loss) bezeichnet.

Das erfindungsgemäße Verfahren ist dadurch gekennzeichnet, dass bei der Überprüfung mindestens ein netzteilender Schnitt durch das Netzwerkmodell gesetzt wird und für zumindest einen Teil der durch den Schnitt betroffenen Netzwerkelemente eine Analyse bezüglich des Datenverkehrs durchgeführt wird.

Als netzteilender Schnitt wird erfindungsgemäß ein Schnitt durch das Netzwerkmodell bezeichnet, der das Netz in mindestens zwei, vorzugsweise in genau zwei Teile oder Bereiche unterteilt. Die Schnitte, die im Folgenden auch als Cuts bezeichnet werden, stellen somit Unterteilungen der durch die Knoten und Links gebildeten Netzwerktopologie dar. Die Lage des Schnitts, das heißt die Netzwerkelemente, durch diese dieser gelegt wird, wird vorzugsweise so gewählt, dass dieser über Netzwerkelemente läuft, die geringe Verfügbarkeiten aufweisen. Der Schnitt mit der geringsten Gesamtverfügbarkeit wird auch als minimaler Schnitt, minimal Cut oder Min Cut bezeichnet.

Als von einem Schnitt betroffene Netzwerkelemente werden erfindungsgemäß vorzugsweise Netzwerkelemente bezeichnet, die in dem Schnitt liegen, das heißt durch die oder über die der Schnitt gelegt beziehungsweise gesetzt ist.

Die Analyse, die bezüglich des Datenverkehrs für die Netzwerkelemente, die von einem Schnitt betroffen sind, durchgeführt wird, ist erfindungsgemäß eine Analyse bezüglich der Verfügbarkeit von Netzwerkelementen und bezüglich der Menge an Datenverkehr, die weitergeleitet werden kann. Insbesondere wird überprüft, ob ein Netzwerkelement verfügbar ist und in dem Fall vorzugsweise auch welche Menge das verfügbare Netzwerkelement weiterleiten kann. Diese Menge an Datenverkehr, die von einem Netzwerkelement weitergeleitet werden kann, wird auch als Kapazität des Netzwerkelementes bezeichnet.

Besonders bevorzugt werden bei einem Schnitt, bei dem mehr als ein Netzwerkelement betroffen ist, unterschiedliche Kombinationen von Ausfällen der einzelnen Netzwerkelementen bei der Analyse berücksichtigt.

Indem bei dem erfindungsgemäßen Verfahren nur eine Teilmenge der in dem Netzwerk enthaltenen Netzwerkknoten für die Analyse berücksichtigt werden, kann die Zeit, die zur Durchführung der Analyse notwendig ist, erheblich verringert werden und die Analyse kann somit in einer vertretbaren Zeit durchgeführt werden. Insbesondere ist es nicht notwendig, jede Kombination von Ausfällen der Netzwerkelemente des Netzwerkes zu betrachten.

Da zudem außer dem reinen Setzen eines Schnittes die von dem Schnitt betroffenen Netzwerkelemente analysiert werden, kann bei der Analyse bezüglich des Datenverkehrs auch ein Teilausfall erkannt werden, der bei einem herkömmlichen Setzten eines netzteilenden Schnittes nicht möglich wäre. Als Teilausfall wird hierbei ein Ausfall zumindest eines der Netzwerkelemente bezeichnet, bei dem aber immer noch eine Restkapazität der Netzwerkelemente vorhanden ist. Diese Restkapazität kann erfindungsgemäß zusätzlich dahingehend überprüft werden, ob diese für den Transport des zu erwartenden Datenverkehrs ausreicht. Bei solchen Teilausfällen kann ein oder können mehrere Netzwerkelemente ausgefallen sein, das heißt physikalisch ausgefallen sein und somit nicht mehr verfügbar oder erreichbar sein. Ein physikalischer Ausfall eines Netzwerkelementes, das heißt die Nicht-Verfügbarkeit wird im Sinne der Erfindung auch kurz als Ausfall bezeichnet.

Bei bekannten Verfügbarkeitsanalysen werden nur Ausfälle von Netzwerkverbindungen berücksichtigt, bei denen eine Übertragung zwischen Knoten nicht mehr möglich ist, das heißt die Verbindung ausfällt. Hierbei werden daher keine Störungen erkannt, bei denen die Übertragung nur teilweise blockiert ist, weil beispielsweise über einen nicht ausgefallenen Link eine, wenn auch zu geringe Restkapazität vorhanden ist. Dies ist bei dem erfindungsgemäßen Verfahren aber möglich. Zudem können bei dem erfindungsgemäßen Verfahren durch die Analyse Engpässe in dem Netzwerk konkret lokalisiert werden.

Ein weiterer Vorteil der vorliegenden Erfindung besteht darin, dass die Überprüfung anhand des Netzwerkmodells erfolgt und hierbei die gesamte Topologie betrachtet werden kann. Im Gegensatz zu Verfahren, bei denen die Anforderungen an einzelnen Netzwerkelementen einzeln bestimmt und überprüft werden müssen, ist das erfindungsgemäß Verfahren daher schneller und damit mit geringerer Rechnerleistung durchführbar.

Vorzugsweise wird ein netzteilender Schnitt durch Netzwerkknoten und/oder Netzwerkverbindungen gesetzt. Dieser Ansatz ist gegenüber dem reinen Setzen eines Schnittes durch Netzwerkverbindungen vorteilhaft, da es auch bei einem Knoten zu einem Ausfall kommen kann, während die Verbindung, über die der Knoten mit weiteren Knoten verbunden ist, gegebenenfalls noch verfügbar wäre.

Auch Knoten besitzen eigene Ausfallwahrscheinlichkeiten und Kapazitäten. Da bei der Überprüfung des Netzwerkmodells vorzugsweise auch Knoten berücksichtigt werden, wird die Untersuchung des Netzwerkes verbessert und es können auf einfache und zuverlässige Weise Engpässe bei der Datenübermittlung zuverlässig lokalisiert werden.

Vorzugsweise umfasst die Analyse bezüglich des Datenverkehrs die Bestimmung des mittleren Verkehrsverlustes, der im Folgenden auch als Mean Loss (ML) bezeichnet wird.

In einem Netzwerk treten Verkehrsverluste in der Regel aus zwei unterschiedlichen Gründen auf. Zum einen kann es zu Netzwerkausfällen kommen, bei denen der Verkehr nicht mehr weitergeleitet oder geroutet werden kann.

Zum anderen kommt es zum Blockieren, bei dem mehr Kapazität für Datentransfer notwendig ist als zur Verfügung steht.

Eine mögliche Formel zur Bestimmung eines Verkehrsverlusts (Mean Loss (ML)) als die Kombination der beiden oben genannten Gründe für den Verkehrsverlust, nämlich des Ausfalls von Netzwerkelementen und der Blockierung von Netzwerkelementen wird mit der vorliegenden Erfindung angegeben. Im Gegensatz zu bekannten Algorithmen für die Berechnung von Netzwerkverfügbarkeiten, bei denen die Wahrscheinlichkeit geschätzt wird, dass alle oder einige Knoten eines Netzwerkes verbunden sind, wird es mit der vorliegenden Erfindung möglich die Wahrscheinlichkeit von Ausfallszenarien mit dem dadurch geänderten Verkehrsaufkommen an anderen Netzwerkelementen, insbesondere in dem Schnitt, in dem das oder die von dem Ausfall betroffenen Netzwerkelement liegen, zu kombinieren, um Verfügbarkeitsengpässe von Knoten und/oder Links sowie Kapazitätsengpässe in Kombination miteinander finden zu können. Es hat sich gezeigt, dass der Mean Loss als Angabe sowohl für Ausfälle von Netzwerkelementen als auch für die zur Verfügung stehende Kapazität geeignet ist. Insbesondere wird daher bei dem erfindungsgemäßen Verfahren durch die Bestimmung eines Wertes für den Mean Loss sowohl der Verkehr berücksichtigt, der bei einem Ausfall eines Netzwerkelemente nicht mehr transportiert werden kann als auch der Verkehr, der mangels ausreichender Kapazität oder Restkapazität einer oder mehrerer der Netzwerkelemente nicht mehr transportiert werden kann. Besonders bevorzugt wird der Mean Loss nicht für ein einzelnes Netzwerkelement berechnet beziehungsweise ermittelt, sondern wird als Wert für alle Netzwerkelemente in einem Schnitt bestimmt. Hierdurch wird eine Abhängigkeit des Überlastens und damit Blockierens einzelner oder mehrerer Netzwerkelemente bei Ausfall eines oder mehrerer Netzwerkelemente berücksichtigt.

Unter mittlerem Verkehrsverlust, der auch als Mean Loss (ML) bezeichnet wird, wird erfindungsgemäß das Verkehrsvolumen oder Datenvolumen beziehungsweise die Verkehrsmenge oder Datenmenge verstanden, die aufgrund von Ausfall oder Blockierung nicht transportiert werden kann, multipliziert mit der Wahrscheinlichkeit des Auftretens dieses Verlustes.

Besonders bevorzugt, wird der mittlere Verkehrsverlust (Mean Loss) gegen einen Referenzwert geprüft, insbesondere mit einem Referenzwert verglichen. Der Referenzwert ist vorzugsweise ein vorgegebener Wert. Dieser Wert wird weiter vorzugsweise für das gesamte Netzwerk vorgegeben. Indem keine absolute Betrachtung von Mean Loss Werten, die für einzelne Netzwerkelemente bestimmt werden, erforderlich ist, sondern bei dieser Ausführungsform lediglich ein Vergleich, das heißt das Prüfen einer Relation des ermittelten Wertes zu dem Referenzwert ausreicht, wird die erfindungsgemäße Analyse weiter vereinfacht. Zudem lassen sich durch eine Begrenzung auf einen maximalen Wert des Mean Loss Engpässe im Netz zuverlässig lokalisieren.

Gemäß einer Ausführungsform wird bei der Analyse des Datenverkehrs der Ausfall mindestens eines Netzwerkknotens in dem Schnitt und/oder einer Netzwerkverbindung in dem Schnitt berücksichtigt. Besonders bevorzugt werden hierbei alle möglichen Kombinationen von Ausfällen eines oder mehrerer Netzwerkelemente in dem Schnitt berücksichtigt. Für jede dieser Kombinationen können dann der Datenverkehr und insbesondere der Verkehrsverlust, in Form des Mean Loss, bestimmt werden. Durch einen vorzugsweise durchgeführten Vergleich mit einem Referenzwert können somit diejenigen Kombinationen ermittelt werden, bei denen der Mean Loss zu groß ist. Besonders bevorzugt werden dabei auch die für diese Kombination als ausgefallen berücksichtigten Netzwerkelemente erfasst. Weiterhin kann auch der betroffene Datenverkehr, der nicht mehr transportiert werden kann, erfasst werden. Somit werden die Engpässe sowohl hinsichtlich der Verfügbarkeit als auch bezüglich der (Rest-)Kapazität zuverlässig in jedem Schnitt lokalisierbar.

Gemäß einer Ausführungsform wird bei der Analyse zusätzlich zu dem Ausfall mindestens eines Netzwerkelementes die Kapazität mindestens eines weiteren Netzwerkelementes in dem Schnitt nach der Berücksichtigung des Ausfalls oder der Ausfälle berücksichtigt. Als Kapazität des Netzwerkelementes wird hierbei insbesondere die Menge an Datentransfervolumen bezeichnet, die ein Netzwerkknoten oder eine Netzwerkverbindung weiterleiten kann. Die Kapazität stellt hierbei vorzugsweise die Restkapazität des Netzwerkelementes dar, das heißt die Kapazität, die noch nicht durch bereits zu erwartenden Datenverkehr belegt ist.

Nach dem Erzeugen eines Schnitts werden vorzugsweise die Ausfallwahrscheinlichkeit und Kapazität der beteiligten Netzwerkelemente ermittelt und das Datentransfervolumen über den Schnitt wird berechnet. Der erzeugte Schnitt dient als Basis zur Untersuchung von Teilausfällen, bei denen die beteiligten Netzwerkelemente in allen Kombinationen verfügbar oder ausgefallen betrachtet werden. Für jeden Fall wird die Wahrscheinlichkeit des Auftretens und das blockierte Verkehrsvolumen bestimmt.

Indem zusätzlich zu dem Ausfall und insbesondere nach der Berücksichtigung des Ausfalls oder der Ausfälle die Restkapazität berücksichtigt wird, kann ermittelt werden, ob die nach dem Ausfall eines oder mehrerer Netzwerkelemente noch zur Verfügung stehenden Netzwerkelemente in dem Schnitt für die Weiterleitung des Datenverkehrs ausreichen. Ist dies nicht der Fall, ist trotz der Verfügbarkeit, das heißt des Nicht-Ausfalls dieser restlichen Netzwerkelemente, der Verkehr als verlorener Verkehr, das heißt nicht transportierbarer Verkehr zu werten. Dies kann bei der Analyse des Datenverkehrs bei dem der Mean Loss bestimmt wird, durch Einbeziehung dieses Verlustes in den Wert des Mean Loss berücksichtigt werden.

Vorzugsweise wird das Setzen eines Schnittes nach der Gewichtung der Netzwerkelemente durchgeführt. Indem eine Gewichtung der Netzwerkelemente, das heißt der Knoten und/oder Links erfolgt, ist eine einzelne Betrachtung aller in dem Netzwerkmodell vorhandenen Links und/oder Knoten nicht erforderlich. Die Netzwerkelemente werden bei der Gewichtung beispielsweise in Bereiche zusammengefasst, in denen dann Netzwerkelemente enthalten sind, die ein gemeinsames Kriterium erfüllen.

Gemäß einer Ausführungsform erfolgt das Setzen des Schnittes nach einer Gewichtung der Netzwerkelemente bezüglich deren Ausfallwahrscheinlichkeit. Hierdurch können die Netzwerkknoten und/oder Netzwerkverbindungen identifiziert werden, deren Ausfallwahrscheinlichkeit am höchsten und deren Verfügbarkeit damit am geringsten ist. Werden die Schnitte nach einer solchen Gewichtung gesetzt, so erhält man Schnitte, die dem Min Cut nahe sind. Da bei dem erfindungsgemäßen Verfahren nach dem Setzen des Schnittes aber weiterhin eine Analyse bezüglich des Datenverkehrs erfolgt, können bei dem erfindungsgemäßen Verfahren auch Engpässe in dem Netzwerk gefunden werden, die durch einen Kapazitätsengpass bedingt sind.

Gemäß einer weiteren Ausführungsform erfolgt das Setzen des Schnitts nach einer Gewichtung der Netzwerkelemente bezüglich der Abweichung von einem Mittelwert der Ausfallwahrscheinlichkeit des Netzwerkelementes. Die Abweichungen lassen sich als Differenz zwischen einer Regressionsgraden, die einen Mittelwert darstellt, und den tatsächlichen Werten bestimmen. Indem die Abweichung vom Mittelwert der Ausfallwahrscheinlichkeit bestimmt wird und diese für die Gewichtung der Netzwerkelemente verwendet wird, ist es möglich zusätzliche Schnitte zu erzeugen, in denen dann wiederum eine Analyse bezüglich des Datenverkehrs erfolgen kann. Durch das Setzen weiterer Schnitte abgesehen von den Schnitten, die mittels Gewichtung nach der Ausfallwahrscheinlichkeit gesetzt werden, kann das erfindungsgemäße Verfahren und insbesondere das Erkennen von Engpässen weiter verbessert werden, ohne, dass der benötigte Zeitaufwand und Rechenaufwand erheblich gesteigert wird.

Gemäß einer weiteren Ausführungsform erfolgt das Setzen des Schnittes nach einer Gewichtung der Netzwerkelemente bezüglich der Abweichung von einem Mittelwert der Kapazität der Netzwerkelemente. Auch diese Abweichungen lassen sich als Differenz zwischen einer Regressionsgraden, die einen Mittelwert darstellt, und den tatsächlichen Werten bestimmen. Hierdurch können weitere Schnitte gesetzt werden, die bei einer reinen Betrachtung der Ausfallwahrscheinlichkeit oder der Abweichung von einem Mittelwert von der Ausfallwahrscheinlichkeit nicht gefunden beziehungsweise gesetzt werden würden. Auch bei diesen Schnitten erfolgt erfindungsgemäß weiterhin eine Analyse bezüglich des Datenverkehrs. Somit kann durch die weiteren Schnitte das Erkennen von Engpässen in dem Netz weiter verbessert werden.

Bei dieser Gewichtung werden gemäß einer Ausführungsform reziproke Residuen der Kapazität und gemäß einer zusätzlichen oder alternativen Ausführungsform die reziproken Residuen der Ausfallwahrscheinlichkeit verwendet. Hierbei wird die Ausfallwahrscheinlichkeit vorzugsweise mit dem negativen Logarithmus ausgedrückt. Dies ist vorteilhaft, da sich in einem Schnitt die Kapazitäten addieren, die Ausfallwahrscheinlichkeiten aber multiplizieren. Indem der Logarithmus verwendet wird, wird diese Multiplikation zur Addition. Damit wird erreicht, dass ein Schnitt mit einer Wahrscheinlichkeit proportional zum Produkt der einzelnen Ausfallwahrscheinlichkeiten ausgewählt oder gesetzt wird.

Vorzugsweise erfolgt die Analyse der von dem gesetzten Schnitt betroffenen Netzwerkelemente in einem iterativen Verfahren. Dieses Verfahren kann beispielsweise ein Verfahren zur Bestimmung einer Netzwerkverfügbarkeit integriert oder damit kombiniert sein. Bei den einzelnen Iterationen werden hierbei vorzugsweise alle möglichen Kombinationen von Ausfällen der in dem Schnitt liegenden Netzwerkelemente einzeln betrachtet. Hierdurch kann eine zuverlässige Lokalisierung von Engpässen erfolgen. Als Verfahren zur Bestimmung der Netzwerkverfügbarkeit wird insbesondere ein Verfahren bezeichnet, bei dem die Verfügbarkeit der Netzwerkknoten und / oder Netzwerkverbindungen verwendet wird. Gemäß einer Ausführungsform werden bei der Bestimmung der Netzwerkverfügbarkeit beispielsweise die Links in einem Netzwerkmodell gewichtet mit dem negativen Logarithmus von deren Ausfallwahrscheinlichkeit und anschließend ein Link proportional zu dessen Gewichtung gewählt, die Knoten am Ende des Links miteinander verbunden und die dazwischen liegenden Links werden gelöscht. Dieses Verfahren wird rekursiv wiederholt, bis nur noch weinige Knoten verbleiben. Anschließend wird ein netzteilender Schnitt gesetzt. In ein solches Verfahren kann erfindungsgemäß die Überprüfung des Netzwerkmodells iterativ einbezogen wird. Indem die Betrachtung der einzelnen Kombinationsmöglichkeiten von Ausfällen in einem Schnitt iterativ einbezogen werden, können alle Kombinationsmöglichkeiten von Ausfällen in jedem der erzeugten Schritte berücksichtigt werden.

Gemäß einer weiteren Ausführungsform umfasst das Verfahren den weiteren Schritt des Einrichtens und / oder Anpassens des Datennetzwerkes entsprechend eines Netzwerkmodells, das auf der Basis der Überprüfungsergebnisse, die durch das erfindungsgemäße Überprüfen, insbesondere auf der Basis des Analyseergebnisses bezüglich des Datenverkehrs erhalten wurden, optimiert werden. Als Einrichten wird hierbei ein Erstellen eines neuen tatsächlichen Netzwerkes bezeichnet. Als Anpassen wird ein Ändern eines bestehenden tatsächlichen Netzwerkes bezeichnet. Das Einrichten und/oder Anpassen erfolgt hierbei entsprechend dem optimierten Netzwerkmodell. Hierbei werden beispielsweise einzelne Netzwerkknoten und/oder Netzwerkverbindungen durch neue, verlässlichere Netzwerkelemente ersetzt oder es werden entsprechende Netzwerkelemente mit einer höheren Kapazität gewählt und gegebenenfalls ausgetauscht oder eingefügt. Die zu ersetzenden oder auszutauschenden Netzwerkelemente und die erforderlichen Kapazitäten werden durch die Analyse gemäß dem Datenverkehr ermittelt und identifiziert.

Das Überprüfen des Netzwerkmodells gemäß der vorliegenden Erfindung, aufgrund dessen das tatsächliche Netzwerk angepasst und / oder eingerichtet wird, stellt insbesondere ein Hinzufügen und/oder Entfernen von Netzwerkverbindungen und /oder Netzwerkknoten dar. Zudem kann durch Verändern der Kapazität von Netzwerkverbindungen und / oder Netzwerkknoten, das heißt Wählen eines Netzwerkelementes mit einer höheren Kapazität für den Datenverkehrtransport, eine Optimierung bei dem erfindungsgemäßen Verfahren erfolgen. Entsprechend des so optimierten Netzwerkmodells kann das geplante oder existierende tatsächliche Netzwerk eingerichtet oder angepasst werden.

Gegenstand der vorliegenden Erfindung ist somit neben der reinen Untersuchung eines Netzwerkes auch die Einrichtung und/oder die Anpassung des Netzwerkes.

Beispielsweise kann mit dem erfindungsgemäßen Verfahren ein Mobilfunknetz, das heißt ein Datentransportnetzwerk in einem Mobilfunknetz zur Übermittlung von Daten untersucht und gegebenenfalls anhand eines optimierten Netzwerkmodells eingerichtet oder angepasst werden. Mobilfunknetze dienen vor allem zum Transport von Daten zwischen Teilnehmern oder zwischen angebotenen Diensten und Teilnehmern. Eine Untersuchung und gegebenenfalls Optimierung von existierenden oder geplanten Datentransportnetzwerken nach dem erfindungsgemäßen Verfahren ist sowohl für einen Benutzer als auch für einen Betreiber eines Mobilfunknetzes vorteilhaft, da eine zuverlässige Datenübertragung mit minimal notwendigen Mitteln erzielt wird.

Das erfindungsgemäße Verfahren kann mittels Software- und / oder Hardware implementiert sein.

Gemäß einem weitern Aspekt betrifft die Erfindung ein Computerprogrammprodukt, mit einem auf einem Computer lesbaren Programmmedium, das, wenn das Programm geladen ist, Programmmittel zur Durchführung des erfindungsgemäßen Verfahrens aufweist. Auch ein Programm, das Anweisungen umfasst, die ausgelegt sind, um das erfindungsgemäße Verfahren auszuführen ist Gegenstand der vorliegenden Erfindung. Auch ein computerlesbares Medium, auf dem ein Programm gespeichert ist, wobei das Programm den Computer dazu veranlasst, das erfindungsgemäße Verfahren auszuführen ist Gegenstand der vorliegenden Erfindung.

Das Computerprogrammprodukt kann beispielsweise auf einem Rechner, insbesondere einem Server gespeichert und ausgeführt werden. Das Computerprogrammprodukt kann beispielsweise von einer Speichereinrichtung, aus dem Internet oder dergleichen auf beziehungsweise in den Rechner, z.B. Computer oder Server geladen werden. Eine geeignete Speichereinrichtung kann beispielsweise dadurch gekennzeichnet sein, dass die Verfahrensschritte der wie vorstehend beschriebenen erfindungsgemäßen Verfahren in in der Speichereinrichtung gespeicherten Programmmitteln integriert sind. Als Speichereinrichtung können zum Beispiel herkömmliche Speichermedien vorgesehen sein, die jedoch durch die Programmmittel, beziehungsweise durch die Software, eine besondere Funktionalität verkörpern, durch die sie sich von den bekannten Speichermedien in der besonderen Weise der vorliegenden Erfindung unterscheiden.

Bei dem erfindungsgemäßen Computerprogrammprodukt ist insbesondere von Vorteil, dass aufgrund des verbesserten Verfahren die Zeiten zur Ermittlung von Engpässen und die damit verbundene Rechnerleistung verringert ist. Zudem sind die Ergebnisse, die von dem Computerprogrammprodukt beziehungsweise dem dadurch ausgeführten Programm ausgegeben werden können, beispielsweise die ausgefallenen Netzwerkelemente und die ausgefallenen Demands, als Eingangsgrößen zur Optimierung des Netzwerkmodells geeignet.

Vorteile und Merkmale, die bezüglich des erfindungsgemäßen Verfahren beschrieben werden, gelten daher - soweit anwendbar - ebenfalls für das Computerprogrammprodukt und umgekehrt.

Mit der vorliegenden Erfindung wird somit eine Möglichkeit zum Bestimmen von Engpässen und Schwachstellen in einem Netzwerk bereitgestellt. Es können dabei insbesondere auch kapazitive Engpässe in einem Netzwerk gesucht beziehungsweise ermittelt werden. Darauf aufbauend kann dann eine Optimierung des Netzwerkes, beispielsweise durch Erhöhung von Kapazitäten einzelner oder mehrerer Netzwerkelemente und/oder einer optimierten/ geänderten Vernetzung der Netzwerkknoten erreicht werden.

Gemäß der Erfindung werden hierbei nicht nur die Ausfallwahrscheinlichkeit sondern auch die Kapazität beziehungsweise die Verkehrskonzentration der Daten, das heißt des Verkehrs berücksichtigt. Das Ergebnis des erfindungsgemäß verwendeten Überprüfens des Netzwerkmodells kann ein berechneter Verkehrsverlust, eine Angabe der ausgefallenen Netzwerkelemente und/oder eine Angabe des betroffenen Datenverkehrs, der insbesondere als Anfrage oder Demand identifiziert wird, sein. Mit diesen Ergebnissen ist ein gezieltes Anpassen von Links und / oder Knoten möglich.

Kern der Erfindung ist zum einen, dass Schnitte bezüglich der Einflüsse von Teilausfällen überprüft werden. Weiterhin ist Kern der Erfindung, dass die Schnitte auf unterschiedliche Weise erzeugt werden, das heißt unterschiedliche Kriterien für das Setzen der Schnitte angewendet werden. Insbesondere werden zusätzliche Schnitte zu den bereits bekannten Schnitten nach einer Gewichtung der Netzwerkelemente nach deren Ausfallwahrscheinlichkeit erzeugt.

Die Erfindung wird im Folgenden erneut unter Bezugnahme auf die beiliegenden Figuren genauer erläutert.

Figur 1 zeigt eine schematische Darstellung eines Netzwerkmodells eines Datentransportnetzwerks mit Netzwerkverbindungen und Netzwerkknoten.

Figur 2 zeigt eine schematische Darstellung eines Schnitterzeugungszyklus gemäß einer Ausführungsform des erfindungsgemäßen Verfahrens.

Figur 3 zeigt ein schematisches Ablauf-Diagramm einer Ausführungsform des erfindungsgemäßen Verfahrens.

Figur 4 zeigt eine schematische Darstellung eines Netzwerkes mit gesetzten Schnitten und Figur 4a zeigt eine Detailansicht des unteren Bereichs des Netzwerkes aus Figur 4.

Figur 5 zeigt beispielhaft die Auswirkungen von einzelnen Linkausfällen in einer Baumstruktur.

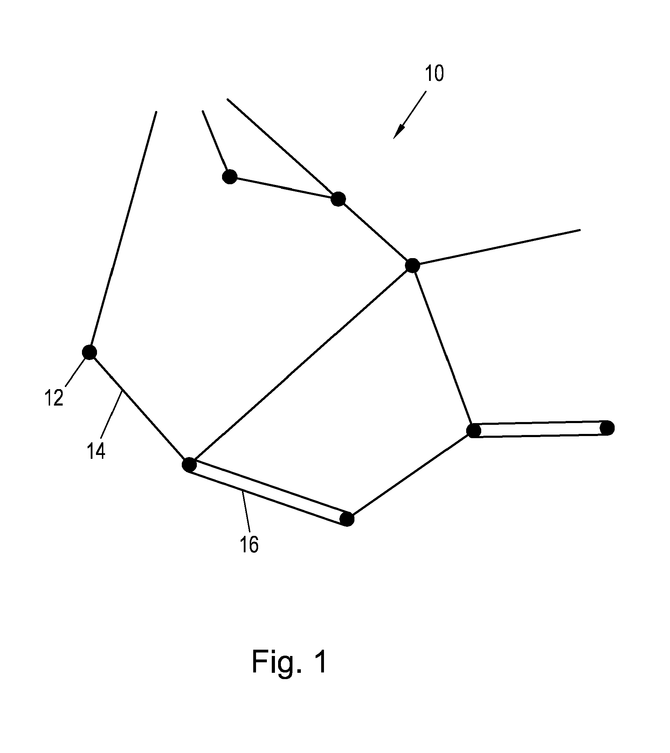

In Figur 1 ist ein Datentransportnetzwerk 10 schematisch gezeigt, das im Folgenden auch als Netzwerk oder Netz bezeichnet wird. Das Netzwerk 10 enthält als Punkte dargestellte Netzwerkknoten 12. Zwischen den Netzwerkknoten 12 sind STM1-Netzwerkverbindungen 14 und E1-Verbindungen 16 vorgesehen, welche als Linien veranschaulicht sind. Die STM1-Netzwerkverbindungen und E1-Verbindungen 16 stellen Verbindungen oder Links im Sinne der vorliegenden Erfindung dar und sind von der ITU-T (International Telecommunication Union - Telekommunication Standardization Sector) standardisierte Verbindungen für die digitale Telekommunikation und dem Fachmann bekannt. Eine E1-Verbindung überträgt ca. 2 Mbit/s, während eine schnellere STM1-Verbindung ca. 155 MBit/s bewältigt. Bei beiden Verbindungsarten werden in diesem Beispiel die Daten digital in kleinen Datenpaketen übertragen, welche auch Zellen genannt werden.

Gemäß eines Beispiels zur Verdeutlichung der Grundlage der Erfindung, geht man davon aus, dass Datenverkehr, der im Folgenden auch als Anfrage (Demand (D)) bezeichnet wird, über eine Anzahl von (n) parallelen, disjunkten Verbindungen (Links) mit einer Link-Ausfallwahrscheinlichkeit (p) transportiert wird. Wenn all diese Links ausfallen oder versagen, ist der gesamte Datenverkehr, das heißt die gesamte Anfrage verloren. Dieses Szenario ist wie ein Schnitt, der auch als Cut bezeichnet wird, an dem ein Netzwerk in zwei Teile unterteilt wird. Der mittlere Verkehrsverlust an einem solchen Cut ($ML_{cut}$) kann gemäß der Formel (1) berechnet werden.

$$(1)$$

$$ML_{cut} = D * p^n$$

Hierbei wird nur ein einziges Ausfallszenario betrachtet, das heißt bei mehreren Links in dem Cut, wird nur das Szenario betrachtet, bei dem alle Links ausfallen. Diese erste Berechnung berücksichtigt somit den Einfluss eines teilweisen Link-Ausfalls einer Link-Gruppe, das heißt der Links in dem Cut aber nicht. Der mittlere Verlust (ML) solcher Teilausfälle kann mit der Einschränkung, dass von identischen Ausfallwahrscheinlichkeiten und Kapazitäten für jeden Link ausgegangen wird, eingeführt werden.

Erneut muss dabei eine Anfrage (D) über eine Anzahl (n) von parallelen oder nichtverbundenen Links transportiert werden; diesmal allerdings mit der gemeinsamen Kapazität (C) und einer Link-Ausfallwahrscheinlichkeit (p). Der mittlere Verkehrsverlust kann für jedes Szenario berechnet werden, in dem (i) Links ausfallen oder versagen. Insgesamt bestehen (n!/i!/(n-i)!) verschiedene Szenarien, in denen genau (i) Links ausfallen. Der Bereich der Anzahl der ausgefallenen Links (i) variiert von 0 (kein Link ausgefallen) bis (n) (alle parallelen Links ausgefallen). In einem Ausfallszenario, tritt dann kein mittlerer Verkehrsverlust auf, wenn die verbleibende Kapazität das Datenvolumen, das heißt die Anfrage, übersteigt. Gleichung (2) zeigt eine Möglichkeit der Berechnung der Summe aller mittleren Verkehrsausfall -Mean loss (ML)- Szenarien.

$$(2)$$

$$ML = D * \sum_{i=0}^{n} \left\{ \begin{array}{l} \left(1 - \dfrac{(n-i)*C}{n*D}\right) * p^i * (1-p)^{(n-i)} * \dbinom{n}{i} \dots f\ddot{u}r D >= \dfrac{n-i}{n}C \\ 0 \dots sonst \end{array} \right\}$$

Der Schätzungsfehler in einem Schnitt mit variabler Kapazität und Verfügbarkeit lässt sich wie folgt bestimmen. Die Verfügbarkeit und Kapazität der Links in einem Cut kann von den identischen Parametern abweichen. Der Einfluss sich variierender Parameter lässt sich wie folgt zeigen. Hierzu kann eine Reihe von Schnitten mit variierender zufallsbasierter Link-Kapazität und variierenden Ausfallraten erzeugt werden. Hierbei werden die folgenden Einschränkungen gemacht:

Die Anzahl der Links (n) ist für jeden Cut in der Analyse konstant.
Das Produkt der zufallsbasierten Link-Ausfallwahrscheinlichkeiten ist für alle Cuts konstant.
Die Summe der Link Kapazitäten (C) ist für alle Cuts konstant.
Die Anfrage (D), die über den Cut transportiert werden sollte ist für alle Cuts konstant.

Eine solche Berechung ist allerdings unbefriedigend, da der berechnete mittlere Verlust aus (1) und aus (2) nicht verwendbar ist, wenn die Kapazität und die Ausfallwahrscheinlichkeit zwischen den Links variiert. Durch die Kapazität und Ausfallwahrscheinlichkeit kann der mittlere Verlust extrem steigen, selbst wenn diese Szenarien nicht sehr häufig sind.

Es hat sich gezeigt, dass eine angemessene Anpassung der Schätzung des mittleren Verlustes die Berechnung nach (1) sowie eine Anpassung von (2) berücksichtigt, indem Teilausfälle berechnet werden, wobei die exakte Kapazität ($c_i$) und eine Ausfallwahrscheinlichkeit ($p_i$) eines der Links und identische Kapazitäten (C/n) und eine Ausfallwahrscheinlichkeit (p) für die anderen Links zur gleichen Zeit berücksichtigt wird. Dies wird durchgeführt, bis jeder Link einmal mit den exakten Werten berücksichtigt wurde. Dadurch wird der Einfluss jedes Links berücksichtigt, ohne Berechnungen zu jeder Kombination aus Ausfallevents notwendig zu machen. Gleichung (3) zeigt eine solche Anpassung. Hierbei ist $ML_{Link}$ die Summe der Mean Loss für eine Reihe von Ausfallszenarien.

$$(3)$$

$$ML_{link} = \sum_{j=1}^{n} \sum_{k=0}^{n-2} \begin{cases} \left( D - \left( C - c_j - k * \frac{C}{n} \right) \right) * \frac{p_j * p^k}{(k+1)} * \left( 1 - \frac{p^n}{p_j * p^k} \right) \\ \quad wenn \ldots 0 \leq C - c_j - k * \frac{C}{n} \leq D \\ \quad 0 \ldots sonst \end{cases}$$

Um den Einfluss der Änderung der Kapazitäten und der Ausfallwahrscheinlichkeiten in Fällen mit mehr als einem Linkausfall zu berücksichtigen, werden vorzugsweise die Abweichung der Link-Ausfallwahrscheinlichkeit von der entsprechenden Ausfallwahrscheinlichkeit ($\sigma_p$), die Abweichung der Link-Kapazität von der entsprechenden Kapazität ($\sigma_c$) und die Abweichung des Produktes von Link-Ausfallwahrscheinlichkeit und Kapazität zu deren entsprechenden Werten ($\sigma_{pc}$) verwendet. Durch Kombinieren und Gewichten dieser Abweichungen wie in $ML_{dev}$ (4) gezeigt, können diese zu der mittleren Verlust-Summen-Berechnung von $ML_{link}$ (3) hinzugefügt werden.

$$(4)$$

$$\sigma_p = \sqrt{\frac{\sum_{j=1}^{n} (p_j - p)^2}{n}}$$

$$\sigma_c = \sqrt{\frac{\sum_{j=1}^{n} \left( c_j - \frac{C}{n} \right)^2}{n}}$$

$$\sigma_{pc} = \sqrt{\frac{\sum_{j=1}^{n}\left(c_j * p_j - \frac{C}{n} * p\right)^2}{n}}$$

$$ML_{dev} = \left(\sigma_{pc} - \sigma_p * \sigma_c\right) * \left(\frac{D}{C}\right)^2 * \frac{p}{n}$$

Zusätzlich sollte vorzugsweise ein mittlerer Verlust berücksichtigt werden, bei dem kein Link ausfällt, in Fällen, in denen die Anfrage die gesamte Kapazität übersteigt. Dies kann berechnet werden, wie in (5) beschrieben:

(5)

$$ML_0 = \begin{cases} (D - C) * (1 - p^n)\ldots wenn\ldots C < D \\ 0\ldots sonst \end{cases}$$

$ML_0$ ist hierbei erneut der MeanLoss eines einzigen Ausfallszenarios.

Indem all diese mittlere Verlustberechnungen von (1), (3), (4) und (5) kombiniert werden, kann die Summe der mittleren Verluste wie in (6) gezeigt, angepasst werden.

(6)

$$ML_{adapt} = ML_0 + ML_{Link} + ML_{dev} + ML_{cut}$$

MLadapt ist hier wieder die Summe der Mean Loss für eine Reihe von Ausfallszenarien.

Es hat sich gezeigt, dass das Ergebnis der angepassten mittlere Verlust Berechnungen aus (6) mit den exakten Werten der Verluste ziemlich gut übereinstimmt.

Zur Bestimmung der Netzwerkverfügbarkeit kann die Verfügbarkeit eines Netzwerkes berechnet werden. Es gibt verschiedene Algorithmen, die nach Engpässen der Verbindung in einem Netzwerk schauen. Allerdings schauen diese nur nach Netzwerk-Schnitt-Ausfällen aber nicht nach Engpässen der Kapazität in Verbindung mit Ausfällen.

Der oben angegebene angepasste mittlere Verlust $ML_{adap}$ berücksichtigt hingegen sowohl die Kapazität als auch die Ausfallwahrscheinlichkeit. Wenn ein Algorithmus nach dem größten mittleren Verlust statt nach Schnitten mit den höchsten Ausfallwahrscheinlichkeiten schaut, können daher die Engpässe von Kapazität und Redundanz in einem Netzwerk gefunden werden. Dies kann bei dem erfindungsgemäßen Verfahren erfolgen.

Ein mögliches Verfahren zur Bestimmung der Verfügbarkeit, das bei dem erfindungsgemäßen Verfahren eingesetzt werden kann, verwendet beispielsweise einen Verfügbarkeits-Algorithmus, der Netzwerk-Schnitte (Cuts), durch zufallsbasierte Methoden, die auf Cuts mit minimaler Verfügbarkeit zulaufen, generiert. Ein Vorteil der Verwendung dieser zufallsbasierten Algorithmen ist, dass auf einfache Weise Kenntnis über die kritischen Cuts / Links und den betroffenen Datenverkehr, das heißt die betroffenen Anfragen, in einem Netzwerk während der Verfügbarkeitsberechnung erhalten werden kann. Wird die Konvergenz von der maximalen Ausfallwahrscheinlichkeit zu dem maximalen mittleren Verlust in einem Netzwerk angepasst, so können erfindungsgemäß Engpässe auf eine einfache Weise ermittelt werden.

Ein verhältnismäßig schneller zufallsbasierte Algorithmus zur Netzwerkverfügbarkeitsbestimmung, der erfindungsgemäß verwendet werden kann, wurde von D.R. Karger (A Randomized Fully Polynomial Approximation Scheme for the All Terminal Network Reliability Problem, Karger, David R., SIAM Journal on Computing29 (2), 1999 (S. 492-- 514)) veröffentlicht.

Hierbei wird jeder Link in dem Netzwerk mit dem negativen Logarithmus von dessen Ausfallwahrscheinlichkeit gewichtet. Dann wird ein Link proportional zu dessen Gewichtung ausgewählt und die Knoten an den Enden werden zusammengeführt und die dazwischen liegenden Links werden gelöscht. Anschließend wird dieses Verfahren wiederholt, bis einige Schritte vor dem Zustand, in dem zwei Knoten verbleiben, erreicht wird. Dann wird jeder Schnitt durch die verbleibenden Knoten mit der einheitlichen Wahrscheinlichkeit einen Schnitt nahe dem minimalen Schnitt (Min Cut) (Netzwerkteilender Schnitt mit minimaler Verfügbarkeit) zu erhalten, ausgewählt. Indem dieser Zyklus sehr oft angewandt wird, werden als Ergebnisse, die Min Cuts und andere Cuts mit einer hohen Ausfallwahrscheinlichkeit, erhalten.

Wie oben gezeigt, ist der mittlere Verlust auch durch Variation der Kapazität und Verfügbarkeit der teilnehmenden Links definiert. Daher wurde bei der Erfindung davon ausgegangen, dass es nicht ausreichend ist, Cuts proportional zu der Link-Ausfallwahrscheinlichkeit zu erzeugen, da die individuellen Link-Kapazität nicht berücksichtigt wird und in dem Schnitt identische Parameter angenommen werden.

Erfindungsgemäß werden daher vorzugsweise alle Links eines Cuts in der Verfügbarkeitsberechnung nach dem Einfluss auf teilweise Ausfälle überprüft, da die mittlere Verlustschätzung nicht den einzelnen Engpass erkennt. Dies erfolgt in dem erfindungsgemäßen Verfahren durch die Analyse der Netzwerkelemente bezüglich des Datenverkehrs. Zudem werden erfindungsgemäß vorzugsweise neue Schnitte erzeugt, wo Bereiche proportional zu den reziproken Resten der Ausfallwahrscheinlichkeit (negativer Logarithmus) und zu den reziproken Resten der Kapazität zusammengeführt sind. Diese zusätzlichen Schnitte werden erfindungsgemäß ebenfalls auf den Einfluss auf teilweisen Ausfall überprüft, d.h. eine Analyse bezüglich des Datenverkehrs an diesen Schnitten vorgenommen. Die zusätzliche Schnitterzeugung kann auf dem oben genannten Algorithmus nach D.R. Karger basieren allerdings mit angepassten Auswahlwahrscheinlichkeiten. Tests mit weiterer Schnitterzeugung basierend auf reziproken Residuen des Produktes aus Kapazität und Ausfallwahrscheinlichkeit (wiederum negativer Algorithmus) haben zu keinen neuen Schnitten geführt, so dass auf diese weitere Schnitterzeugung erfindungsgemäß verzichtet werden kann. Alle erzeugten Schnitte wurden hinsichtlich teilweisem Ausfall und deren Einfluss auf einen mittleren Verlust untersucht. Ein teilweise Ausfallen ist normalerweise Teil von verschiedenen Schnitten, für diese Analyse werden aber lediglich der teilweise Ausfall und der maximale mittlere Verlust registriert.

Angenommen, dass ein Netzwerk ohne jeglichen Verkehrsverlust arbeitet in dem Fall von keinen Ausfällen in dem Netzwerk ($ML_0 = 0$) aus (5), gibt es nun drei unterschiedliche Arten der Schnitterzeugung, aber nur die Schnitte, die proportional zu den Ausfallraten erzeugt wurden, werden für die Netzwerk-Verfügbarkeit-Berechnung berücksichtigt. Hingegen werden vorzugsweise diese und alle anderen Schnitte bei dem erfindungsgemäßen Verfahren verwendet, um Engpässe in dem Netzwerk durch Überprüfen von Teilausfällen gemäß der Erfindung in den Schnitten zu lokalisieren.

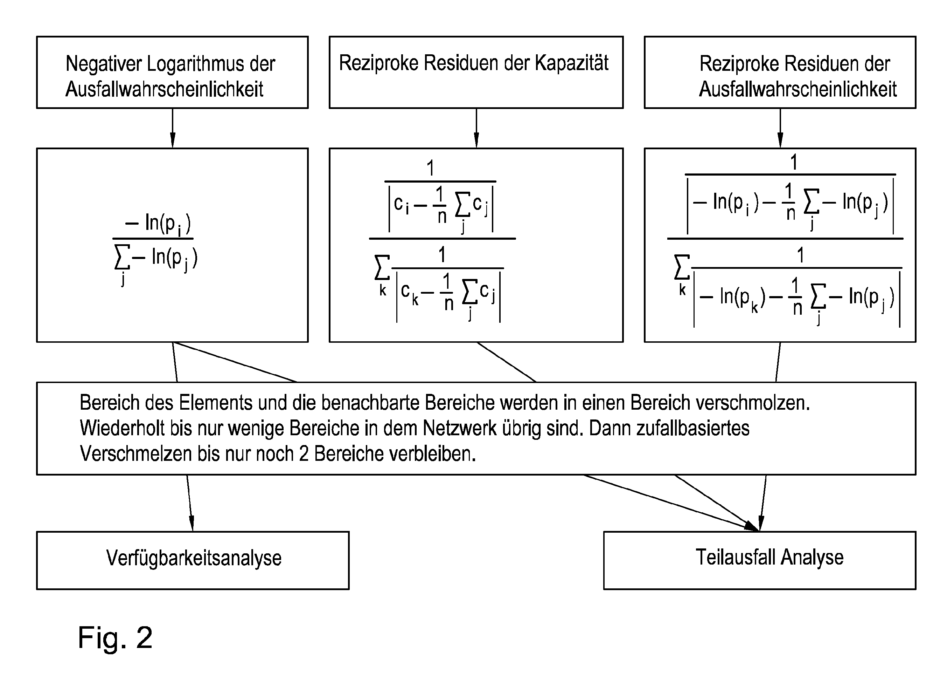

In Figur 2 ist ein Schnitterzeugungszyklus gezeigt, bei dem die drei Arten der Schnitterzeugung angegeben sind. Bei allen drei Arten wird das Element i proportional zu dem Kriterium der jeweiligen Schnitterzeugungsart gewählt und stellt einen eigenen Bereich dar.

In der in Figur 2 links angegebenen Schnitterzeugungsart wird der negative Logarithmus der Ausfallwahrscheinlichkeit als Kriterium gewählt. Das Ergebnis dieser Schnitterzeugung kann dann der Verfügbarkeitsanalyse zugeführt werden. Dies ist beispielsweise bezüglich des Verfahrens nach D.R. Karger bereits bekannt.

In den in Figur 2 in der Mitte und rechts gezeigten Schnitterzeugungsarten werden zum einen die reziproke Residuen der Kapazität und zum anderen reziproke Residuen der Ausfallwahrscheinlichkeit als Kriterium für die Schnitterzeugung verwendet.

Die Ergebnisse dieser beiden Schnitterzeugungsarten sowie auch das Ergebnis der Schnitterzerzeugung nach der links angezeigten Schnitterzeugungsart können für die erfindungsgemäß beschriebene Teilausfall-Analyse verwendet werden.

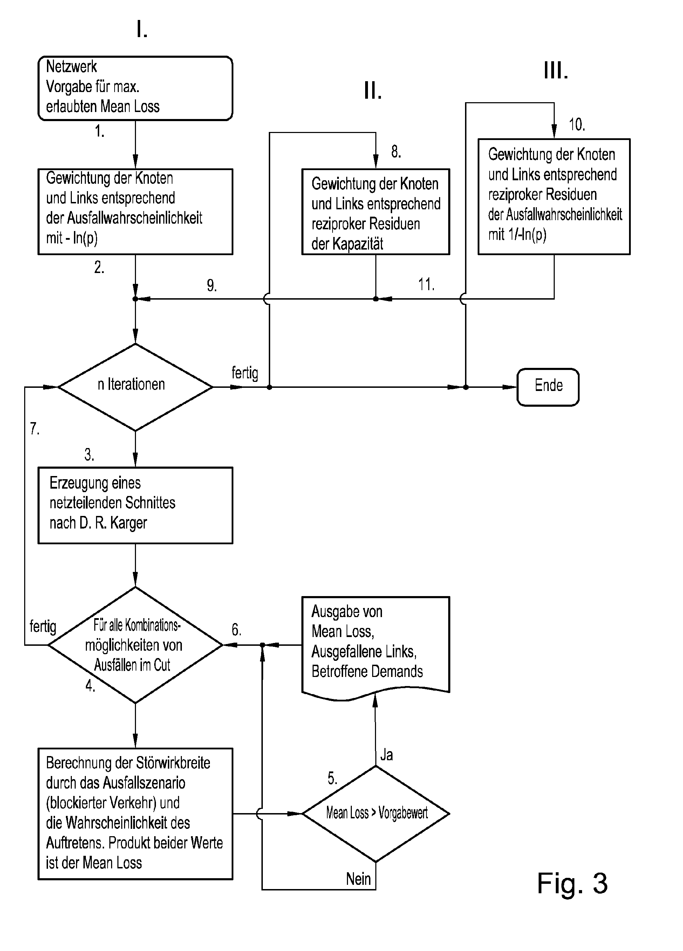

Der Ablauf einer Ausführungsform des erfindungsgemäßen Verfahrens der auch dieses Setzen von Schnitten verdeutlicht, ist schematisch in Figur 3 dargestellt.

In einem ersten Verfahrensteil I. wird zunächst im Schritt 1. ein Wert für den maximal erlaubten Mean Loss für das Netzwerk vorgegeben. In Schritt 2. wird an dem Netzwerkmodell eine Gewichtung der Knoten und/oder der Links entsprechend deren Ausfallwahrscheinlichkeit vorgenommen. Die Gewichtung erfolgt mittels des negativen Logarithmus -ln(p). Anschließend wird eine Iterationsschleife durchlaufen. In dieser wird gemäß Schritt 3. ein netzteilender Schnitt erzeugt. Dieses Verfahren entspricht beispielsweise dem oben genannten Verfahren, das bei D.R. Karger vorgeschlagen wurde.

Anschließend wird nun die Analyse des Datenverkehrs entsprechend der vorliegenden Erfindung durchgeführt. Hierzu wird in Schritt 4. für alle Kombinationsmöglichkeiten von Ausfällen in dem so gesetzten Schnitt eine Störwirkungsbreite durch blockierten Verkehr und durch die Wahrscheinlichkeit des Auftretens des Ausfalls bestimmt. Das Produkt dieser beiden Werte ergibt den Mean Loss. In Schritt 5. wird der so ermittelte Mean Loss mit dem vorgegebenen maximal erlaubten Wert verglichen. Wird hierbei ein Überschreiten des Vorgabewertes erkannt, so erfolgt eine Ausgabe des Mean Loss-Wertes, sowie vorzugsweise ebenfalls der ausgefallenen Links und dem betroffenen Datenverkehr, das heißt der betroffenen Anfragen. Anschließend (Schritt 6.) kehrt der Algorithmus zu Schritt 4. zurück bis alle Kombinationsmöglichkeiten von Ausfällen betrachtet wurden. Über Schritt 7. wird dann die nächste Iteration gestartet bis eine vorgegebene Anzahl von Iterationen (n) durchlaufen wurde. Danach wird der Verfahrensteil II. gestartet. Hierbei wird in Schritt 8 eine Gewichtung der Knoten und/oder der Links entsprechend reziproker Residuen der Kapazität gesetzt. Die so gewichteten Knoten und/oder Links werden wie im Verfahrensteil I. beschrieben der Iterationsschleife zugeführt und entsprechend weiter verarbeitet. Nach Ende der Iterationsschleife startet Verfahrensteil III. mit der in Schritt 10. die Gewichtung der Knoten und/oder Links entsprechend reziproker Residuen der negativen Logarithmen der Ausfallwahrscheinlichkeiten gesetzt wird. Wiederum werden die neu gewichteten Knoten und/oder Links der Iterationsschleife zugeführt und entsprechend weiter verarbeitet. Nach Beendigung dieser letzten Iterationsschleife sind über die Ausgabe alle potentiellen Engpässe, bei denen der Mean Loss überschritten wird, bekannt.

Im Stand der Technik werden bei Netzwerk-Verfügbarkeitsalgorithmen und der mittlere Mean-Loss-Analyse nur Linkausfälle berücksichtigt. Erfindungsgemäß können aber auch Knotenausfälle und Knotenkapazitäten berücksichtigt werden.

Hierzu können erfindungsgemäß explizite Quell- und Ziel-Knoten, die mit dem Netzwerk ohne eine Ausfallwahrscheinlichkeit ($p_i = 0$) und mit einer sehr hohen Kapazität ($c_i$) verbunden sind, gewählt werden. Wie die Links hat auch jeder Knoten einen Ausfallwahrscheinlichkeit und eine bestimmte Kapazität. Wenn das erfindungsgemäße Verfahren gestartet wird, wird jeder Link und Knoten auf einen Ausfallstatus gesetzt und repräsentiert seinen eigenen Bereich. Dann läuft das Verfahren wie zuvor, wobei die Knoten ausgewählt werden und in einen verfügbar Status gesetzt werden, entsprechend dem Setzen der Links. Alle verbundenen verfügbaren Knoten über verfügbare Links werden so gesetzt, dass sie in dem gleichen Bereich sind. Wenn nur zwei Bereiche verbleiben, ist ein Schnitt erzeugt.

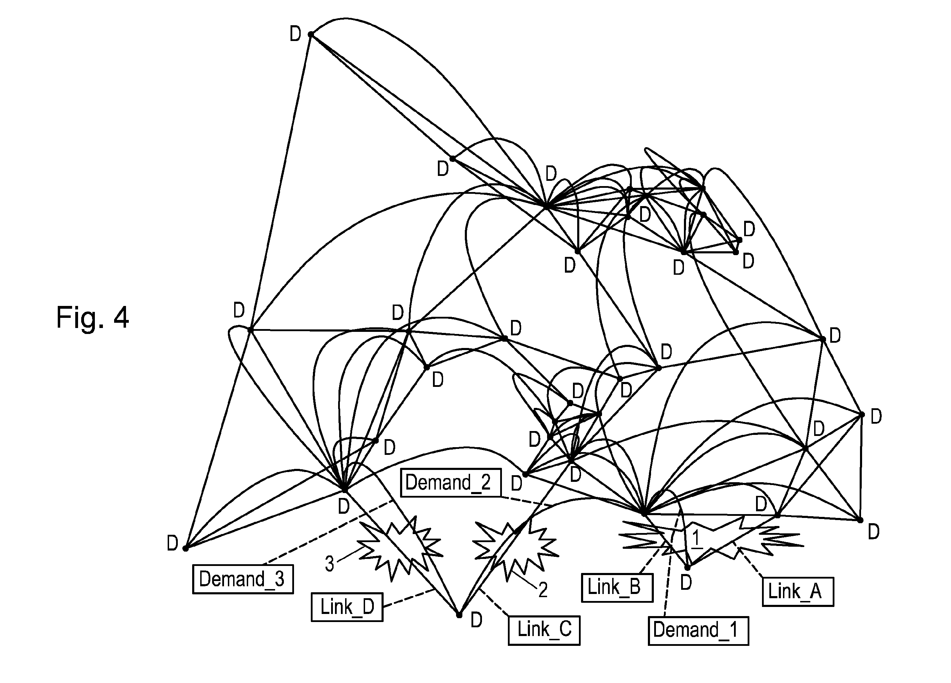

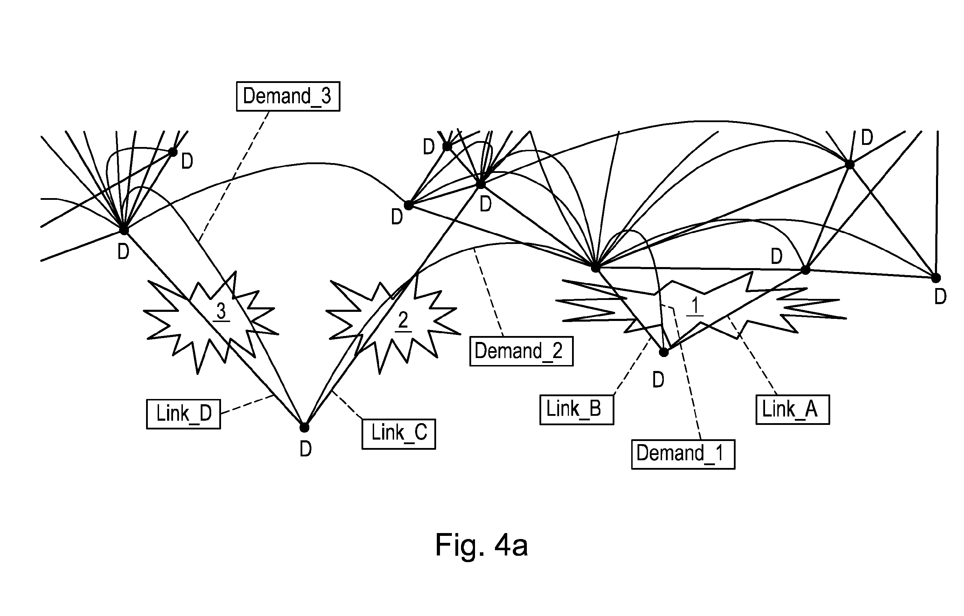

Figur 4 zeigt ein Netzwerk, wobei die geraden Linien die Links und die Bögen die Anfragen, das heißt den Datenverkehr darstellen. Dieses Beispiel umfasst 35 Knoten, 78 Links und 48 Anfragen. Eine Detailansicht des unteren Bereiches des Netwerkes aus Figur 4 ist in Figur 4a gezeigt. Wird für dieses Netzwerk ein maximaler erlaubter Mean Loss vorgegeben (hier z.B. ML >0.4) kann somit nach (Teil-)Ausfällen gesucht werden, die einen Mean Loss von größer 0,4 aufweisen. Bei dem gezeigten Beispiel wird von einer Ausfallwahrscheinlichkeit von einem Link mit 0,0001, von einem Link mit 0,01 und einem Link mit 0,001 ausgegangen. Die Ausfallwahrscheinlichkeit für jeden Knoten wurde auf 0 festgelegt.

Hierbei wurden mittels des Ausführungsbeispiels des erfindungsgemäßen iterativen Verfahrens, das in Figur 2 und 3 angegeben ist, 3 Cuts mit einem Mean Loss von mehr als 0,4 gefunden. Diese sind in der Figur 4 mit Sternen angezeigt. Die Kapazität der Links wurde jeweils mit 350.000 angegeben. Der Datenverkehr (Demand) wurde im Bereich von 0 bis 350.000 und im Mittel mit 75613 angenommen. Die ausgefallenen Elemente, die ausgefallenen beziehungsweise verlorenen Anfragen sowie der sich aus der Ausfallwahrscheinlichkeit und dem tatsächlichen verlorenen Datenverkehr ergebende Mean Loss wird im Folgenden angegeben.

Es wurden drei Ganz- beziehungsweise Teil-Ausfallszenarios gefunden, die einen Mean Loss von mehr als 4,00e-001 aufweisen.

1. Ausfallszenario: Wahrscheinlichkeit = 1,000000e-005
Ausgefallenes Element: Link_A Kapazität: 350.000
Ausfallwahrscheinlichkeit: 1,00e-003
Ausgefallenes Element: Link_B Kapazität: 350.000
Ausfallwahrscheinlichkeit: 1,00e-002
Ausgefallener Demand: Demand_1 Verkehr: 42.620,00
Mittlerer Verkehrsverlust (Mean Traffic Loss) durch Schnitt: 0,426200

2. Teil- Ausfallszenario: Wahrscheinlichkeit = 1,000000e-004
Ausgefallenes Element: Link_C Kapazität: 350.000
Ausfallwahrscheinlichkeit: 1,00e-004
Teilweise ausgefallener Demand: Demand 2 Verkehr: 350.000
Teilweise ausgefallener Demand: Demand 3 Verkehr: 5.039,00
Mittlerer Verkehrsverlust (Mean Traffic Loss): 0,503900

3. Teil- Ausfallszenario: Wahrscheinlichkeit = 1,000000e-004
Ausgefallenes Element: Link_D Kapazität: 350.000
Ausfallwahrscheinlichkeit: 1,00e-004
Teilweise ausgefallener Demand: Demand 2 Verkehr: 350.000
Teilweise ausgefallener Demand: Demand 3 Verkehr: 5.039,00
Mittlerer Verkehrsverlust (Mean Traffic Loss): 0,503900

Wie sich aus diesen Ergebnissen entnehmen lässt, wären die Teil- Ausfallszenarios 2 und 3 bei einem Verfahren, das nicht, wie das erfindungsgemäße Verfahren Teilausfälle in den Schnitten untersucht, nicht gefunden worden, da deren Ausfallwahrscheinlichkeit jeweils zwar hoch ist, aber von einer Umleitung des Verkehrs beispielsweise bei einem Ausfall von Link_C auf Link_D oder umgekehrt oder über die sich an die Links C und D in Figur 4 nach oben anschließenden Links ausgegangen worden wäre und damit kein Schnitt vorgelegen hätte.

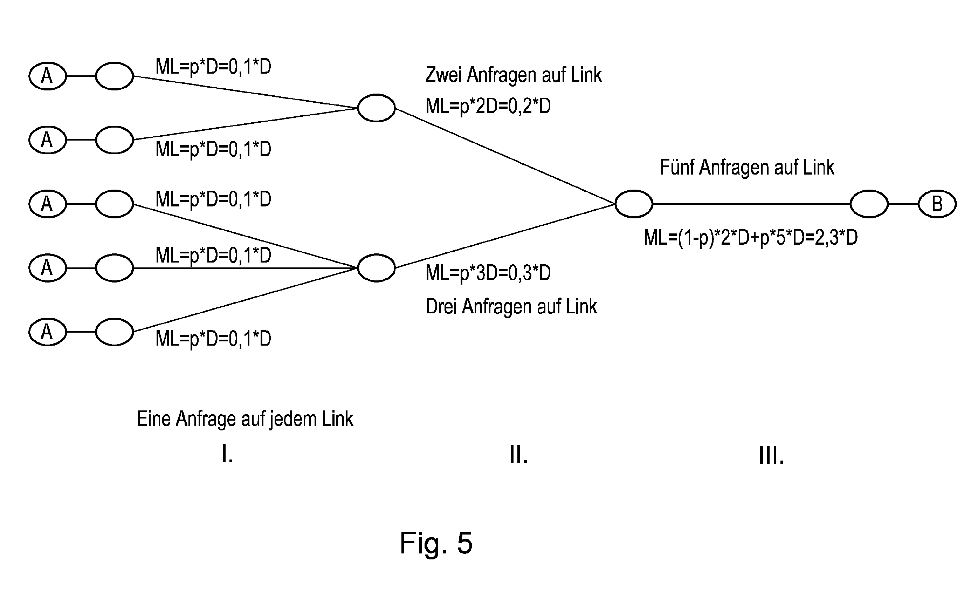

Figur 5 zeigt beispielhaft den Mean Loss in einer Baumstruktur für einzelne Linkausfälle. Hierbei wurde für jede Quelle A von der gleichen Anfrage D an das Ziel B ausgegangen. Jedem Link wurde hierbei die gleiche Kapazität C und Ausfallwahrscheinlichkeit p zugeordnet.

Geht man von p=10% und D=C/3 aus und sucht nach Szenarien, in denen der Mean Loss größer als 0,25 * D ist, so erhält man das gezeigte Ergebnis. Hierbei wurden keine Mehrfachausfälle berücksichtigt.

In dem mit I. gekennzeichneten Stadium besteht noch kein Problem, da nur eine Anfrage auf jedem der Links vorliegt. In Stadium II ist der maximal erlaubte Mean Loss Wert erreicht bei drei Anfragen auf dem unteren Link. Bei lediglich zwei Anfragen auf dem oberen Link hingegen ist der maximal erlaubte Mean Loss noch nicht erreicht. Bei Stadium III ist die Mean Loss Vorgabe von ML < 0,25 dann nicht mehr erfüllt, da sich auf diesen Link fünf Anfragen konzentrieren. Dabei werden zwei Anfragen stets geblockt, da die Kapazität nicht ausreicht und die zusätzlichen Anfragen geblockt werden, wenn der Link versagt.

**Bezugszeichenliste**

10    Netzwerk

12    Netzwerkknoten

14    Link

16    Link

**Patentansprüche**

1. Verfahren zum Untersuchen eines Datentransportnetzwerkes, das zumindest die folgenden Verfahrensschritte umfasst:

   a) Bereitstellen eines Netzwerkmodells, das als Netzwerkelemente zumindest Netzwerkverbindungen und Netzwerkknoten enthält und einem real existierenden oder einem geplanten Datentransportnetzwerk entspricht, und
   b) Überprüfen des Netzwerkmodells
   **dadurch gekennzeichnet, dass** bei der Überprüfung des Netzwerkmodells mindestens ein netzteilender Schnitt durch das Netzwerkmodell gesetzt wird und für zumindest einen Teil der von dem Schnitt betroffenen Netzwerkelemente eine Analyse bezüglich des Datenverkehrs durchgeführt wird.

2. Verfahren nach Anspruch 1, **dadurch gekennzeichnet, dass** der Schnitt durch Netzwerkknoten und/oder Netzwerkverbindungen gesetzt wird.

3. Verfahren nach einem der Ansprüche 1 oder 2, **dadurch gekennzeichnet, dass** die Analyse bezüglich des Datenverkehrs die Bestimmung des mittleren Verkehrsverlustes (Mean Loss) umfasst.

4. Verfahren nach Anspruch 3, **dadurch gekennzeichnet, dass** der mittlere Verkehrsverlust (Mean Loss) gegen einen Referenzwert geprüft wird.

5. Verfahren nach einem der Ansprüche 1 bis 4, **dadurch gekennzeichnet, dass** die Analyse den Ausfall mindestens eines Netzwerkelementes in dem Schnitt berücksichtigt.

6. Verfahren nach Anspruch 5, **dadurch gekennzeichnet, dass** die Analyse zusätzlich die Kapazität mindestens eines weiteren Netzwerkelementes in dem Schnitt nach Berücksichtigung des Ausfalls berücksichtigt.

7. Verfahren nach einem der Ansprüche 1 bis 6, **dadurch gekennzeichnet, dass** das Setzen des Schnitts nach einer Gewichtung der Netzwerkelemente bezüglich der Ausfallwahrscheinlichkeit erfolgt.

8. Verfahren nach einem der Ansprüche 1 bis 7, **dadurch gekennzeichnet, dass** das Setzen des Schnitts nach einer Gewichtung der Netzwerkelemente bezüglich der Abweichung von einem Mittelwert der Ausfallwahrscheinlichkeit der Netzwerkelemente erfolgt.

9. Verfahren nach einem der Ansprüche 1 bis 8, **dadurch gekennzeichnet, dass** das Setzen des Schnitts nach einer Gewichtung der Netzwerkelemente bezüglich der Abweichung von einem Mittelwert der Kapazität der Netzwerkelemente erfolgt.

10. Verfahren nach einem der Ansprüche 1 bis 9, **dadurch gekennzeichnet, dass** die Analyse der von dem Schnitt betroffenen Netzwerkelemente in einem iterativen Verfahren erfolgt.

11. Verfahren nach einem der Ansprüche 1 bis 10, **dadurch gekennzeichnet, dass** dieses den weiteren Schritt des Einrichtens und/oder Anpassens des Datennetzwerkes entsprechend eines Netzwerkmodells umfasst, das auf der Basis der Überprüfungsergebnisse optimiert wurde.

12. Verfahren nach einem der Ansprüche 1 bis 11, **dadurch gekennzeichnet, dass** das Datennetzwerk ein Mobilfunknetz darstellt.

13. Computerprogrammprodukt, mit einem auf einem Computer lesbaren Programmedium, das, wenn das Programm geladen ist, Programmittel zur Durchführung des Verfahrens nach einem der Ansprüche 1 bis 12 aufweist.

Fig. 1

| Negativer Logarithmus der Ausfallwahrscheinlichkeit | Reziproke Residuen der Kapazität | Reziproke Residuen der Ausfallwahrscheinlichkeit |
|---|---|---|

$$\frac{-\ln(p_i)}{\sum_j -\ln(p_j)}$$

$$\frac{\dfrac{1}{\left|c_i - \dfrac{1}{n}\sum_j c_j\right|}}{\sum_k \dfrac{1}{\left|c_k - \dfrac{1}{n}\sum_j c_j\right|}}$$

$$\frac{\dfrac{1}{\left|-\ln(p_i) - \dfrac{1}{n}\sum_j -\ln(p_j)\right|}}{\sum_k \dfrac{1}{\left|-\ln(p_k) - \dfrac{1}{n}\sum_j -\ln(p_j)\right|}}$$

Bereich des Elements und die benachbarte Bereiche werden in einen Bereich verschmolzen. Wiederholt bis nur wenige Bereiche in dem Netzwerk übrig sind. Dann zufallbasiertes Verschmelzen bis nur noch 2 Bereiche verbleiben.

Verfügbarkeitsanalyse

Teilausfall Analyse

Fig. 2

I.

II.

III.

| Netzwerk<br>Vorgabe für max.<br>erlaubten Mean Loss |
| --- |

1.

| Gewichtung der Knoten<br>und Links entsprechend<br>der Ausfallwahrscheinlichkeit<br>mit - ln(p) |
| --- |

8.

| Gewichtung der Knoten<br>und Links entsprechend<br>reziproker Residuen<br>der Kapazität |
| --- |

10.

| Gewichtung der Knoten<br>und Links entsprechend<br>reziproker Residuen<br>der Ausfallwahrscheinlichkeit<br>mit 1/-ln(p) |
| --- |

2.

9.

11.

n Iterationen        fertig        Ende

7.

3.

| Erzeugung eines<br>netzteilenden Schnittes<br>nach D. R. Karger |
| --- |

fertig    Für alle Kombinations-<br>möglichkeiten von<br>Ausfällen im Cut        6.

| Ausgabe von<br>Mean Loss,<br>Ausgefallene Links,<br>Betroffene Demands |
| --- |

4.

| Berechnung der Störwirkbreite<br>durch das Ausfallszenario<br>(blockierter Verkehr) und<br>die Wahrscheinlichkeit des<br>Auftretens. Produkt beider Werte<br>ist der Mean Loss |
| --- |

Ja

5.

Mean Loss > Vorgabewert

Nein

Fig. 3

Fig. 4

Fig. 4a

Fig. 5

EP 2 634 966 A1

**EUROPÄISCHER RECHERCHENBERICHT**

Nummer der Anmeldung

EP 13 15 5055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 2 568 663 A1 (HONEYWELL INT INC [US]) 13. März 2013 (2013-03-13) * Absatz [0019] - Absatz [0110] * * Abbildungen 1-16 * ----- | 1,2,5,6, 10-13 | INV. H04L12/24 |
| A | EP 1 768 045 A2 (CIT ALCATEL [FR] ALCATEL LUCENT [FR]) 28. März 2007 (2007-03-28) * Absatz [0036] - Absatz [0066] * * Abbildungen 2-8 * ----- | 1-13 | |
| A | EP 1 533 941 A2 (CIT ALCATEL [FR] ALCATEL LUCENT [FR]) 25. Mai 2005 (2005-05-25) * Absätze [0007], [0019] - Absatz [0078] * * Abbildungen 1-8 * ----- | 1-13 | |
| A | US 2010/214920 A1 (TEWANI KAMLESH [US] ET AL) 26. August 2010 (2010-08-26) * Absatz [0022] - Absatz [0048] * * Abbildungen 3,5,10,11 * ----- | 1-13 | |

RECHERCHIERTE SACHGEBIETE (IPC)

H04L

Der vorliegende Recherchenbericht wurde für alle Patentansprüche erstellt

| Recherchenort | Abschlußdatum der Recherche | Prüfer |
|---|---|---|
| München | 6. Mai 2013 | Bertsch, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes Dokument

EPO FORM 1503 03.82 (P04C03)

**EP 2 634 966 A1**

**ANHANG ZUM EUROPÄISCHEN RECHERCHENBERICHT
ÜBER DIE EUROPÄISCHE PATENTANMELDUNG NR.**

EP 13 15 5055

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2013

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 2568663 | A1 | 13-03-2013 | EP | 2568663 | A1 | 13-03-2013 |
| | | | US | 2013064070 | A1 | 14-03-2013 |
| EP 1768045 | A2 | 28-03-2007 | CN | 1940951 | A | 04-04-2007 |
| | | | CN | 1941782 | A | 04-04-2007 |
| | | | CN | 1996326 | A | 11-07-2007 |
| | | | CN | 1996330 | A | 11-07-2007 |
| | | | EP | 1768045 | A2 | 28-03-2007 |
| | | | US | 2007067845 | A1 | 22-03-2007 |
| EP 1533941 | A2 | 25-05-2005 | AT | 393994 | T | 15-05-2008 |
| | | | DE | 602004013410 | T2 | 30-07-2009 |
| | | | EP | 1533941 | A2 | 25-05-2005 |
| | | | US | 2005113098 | A1 | 26-05-2005 |
| US 2010214920 | A1 | 26-08-2010 | KEINE | | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008026049 A1

**In der Beschreibung aufgeführte Nicht-Patentliteratur**

- **KARGER, DAVID R.** A Randomized Fully Polynomial Approximation Scheme for the All Terminal Network Reliability Problem. *SIAM Journal on Computing,* 1999, vol. 29 (2), 492-514